# EUROPEAN PATENT SPECIFICATION

(11) **EP 4 180 170 B1**
(45) Date of publication and mention of the grant of the patent: **04.11.2026**
(21) Application number: 22800992.4
(22) Date of filing: 26.04.2022
(51) Int. Cl.: B23P 19/02, F22B 37/00, F22B 37/58, F28D 7/06, F28F 9/18, G21D 1/00, B23P 11/02, F22B 1/02

(54) **METHOD OF DISASSEMBLING STEAM GENERATOR**
VERFAHREN ZUR DEMONTAGE EINES DAMPFERZEUGERS
PROCÉDÉ DE DÉMONTAGE D'UN GÉNÉRATEUR DE VAPEUR

(30) Priority: 29.09.2021 JP 2021159780
(43) Date of publication of application: 17.05.2023
(73) Proprietor: Mitsubishi Heavy Industries, Ltd., Chiyoda-ku Tokyo 100-8332 (JP)
(72) Inventor: UENO, Reiko, 1008332 Tokyo (JP); YAMAMOTO, Takeshi, 1008332 Tokyo (JP); KOBAYASHI, Yuki, 1008332 Tokyo (JP); HARA, Daisuke, 1008332 Tokyo (JP); NODA, Masaki, 1008332 Tokyo (JP); TADA, Kohei, 1008332 Tokyo (JP)
(74) Representative: Cabinet Beau de Loménie
(86) International application number: PCT/JP2022/018888
(87) International publication number: WO 2023/053555

(56) References cited:
- EP-A1- 0 168 698
- CA-A1- 3 113 330
- JP-A- 2003 251 536
- JP-A- 2004 069 107
- JP-A- 2012 189 247
- JP-A- S5 412 002
- JP-A- S5 592 801
- JP-A- S61 213 404
- JP-A- S61 213 404
- KR-A- 20180 031 646
- US-A- 4 406 856

## Description

### [Technical Field]

The present disclosure relates to a method of disassembling a steam generator.

Priority is claimed on Japanese Patent Application No. 2021-159780, filed September 29, 2021.

### [Background Art]

The nuclear power generation facility is provided with a steam generator for generating steam by the heat extracted from a nuclear reactor. The steam generator mainly includes a cylindrical body portion, a hemispherical water chamber, a tube plate that divides a primary region on the water chamber side and a secondary region on the body portion side, and a plurality of heat transfer tubes extending to penetrate this tube plate in the thickness direction. The heat transfer tube is inserted through a through-hole formed in the tube plate, and is fixed to the tube plate by expanding the diameter thereof (expanding the tube) toward the outer peripheral side and welding at the lower end of the tube plate. Primary cooling water containing radioactive substances circulates inside the heat transfer tube.

In a case of performing disassembling work of the steam generator during the decommissioning of nuclear power generation facility, it is required not to spread contamination caused by radioactive substances to the surroundings when removing the heat transfer tube. In particular, it is necessary to prevent contamination from spreading from the heat transfer tube to the tube plate. For example, Patent Document 1 below describes a method for removing a heat transfer tube from a tube plate. In this method, a part inserted through the tube plate in the heat transfer tube is heated from the inside to release the fixation between the heat transfer tube and the tube plate. Accordingly, it is possible to easily pull out the heat transfer tube. Patent Document 2 discloses a method for removing a heat transfer tube from a tube sheet in which a seal welding portion of the heat transfer tube is cut off on a first side of the tube sheet, the tube is cut to protrude from the second side of the tube sheet, a fixation between the tube and the tube sheet is released using a TIG arc heating torch, and the tube is pulled out from the tube sheet to the first side of the tube sheet. Document CA3133330 discloses a known method for disassembling a steam generator.

### [Citation List]

### [Patent Document]

[Patent Document 1]
   Japanese Examined Patent Application, Second Publication No. H7-18531
[Patent Document 2]
   Japanese Patent Application No. S61 213 404

### [Summary of Invention]

### [Technical Problem]

However, the above method is premised on disassembling the existing steam generator in use, and the number of heat transfer tubes to be removed is one or several. On the other hand, when disassembling the steam generator during the decommissioning, all the heat transfer tubes are removed, and thus, it is required not to spread the contaminants to the surroundings, and efficient workability is also required.

The present disclosure has been made to solve the above problems, and an object of the present disclosure is to provide a method of efficiently disassembling a steam generator that can further reduce the spread of contaminants.

### [Solution to Problem]

In order to solve the above problem, according to the present invention, there is provided a method of disassembling a steam generator as defined in claim 1.

In addition, in the step of obtaining the disassembly target, the end surfaces of the heat transfer tubes and the tube plate may be cut such that the end surfaces are flush with each other on the primary region side across the tube plate.

### [Advantageous Effects of Invention]

According to the present disclosure, it is possible to provide a method of efficiently disassembling a steam generator that can further reduce the spread of contaminants.

### [Brief Description of Drawings]

FIG. 1 is a schematic view showing a configuration of a steam generator according to an embodiment of the present disclosure.
FIG. 2 is a flowchart showing a method of disassembling the steam generator according to the embodiment of the present disclosure.
FIG. 3 is a cross-sectional view showing a configuration of a tube plate and a heat transfer tube according to the embodiment of the present disclosure.
FIG. 4 is a cross-sectional view showing a configuration of a disassembly target according to the embodiment of the present disclosure. contaminants.

### [Brief Description of Drawings]

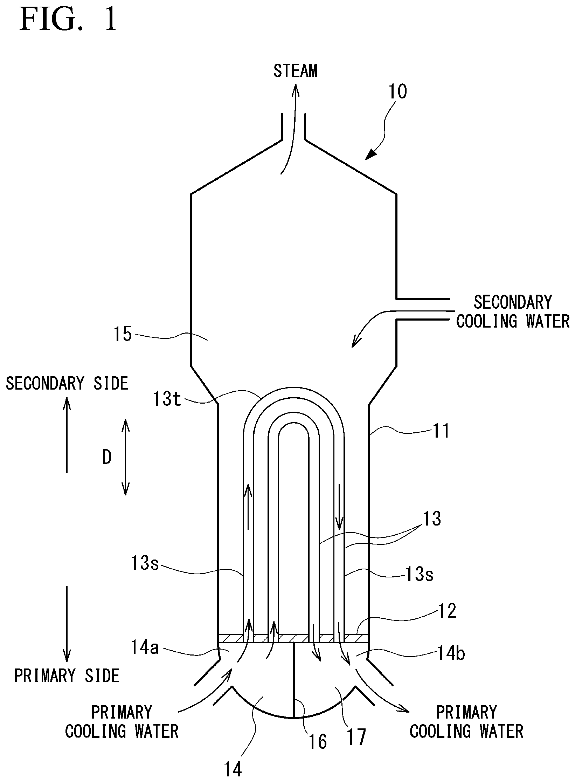

FIG. 1 is a schematic view showing a configuration of a steam generator according to an embodiment of the present disclosure.

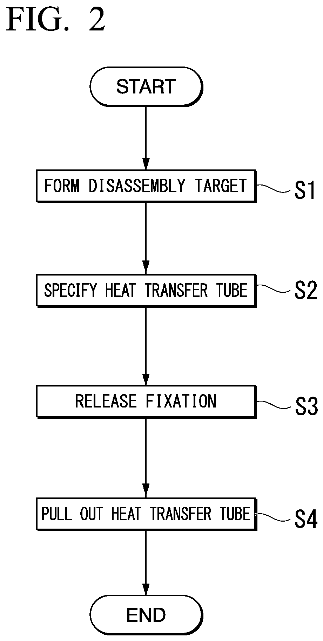

FIG. 2 is a flowchart showing a method of disassembling the steam generator according to the embodiment of the present disclosure.

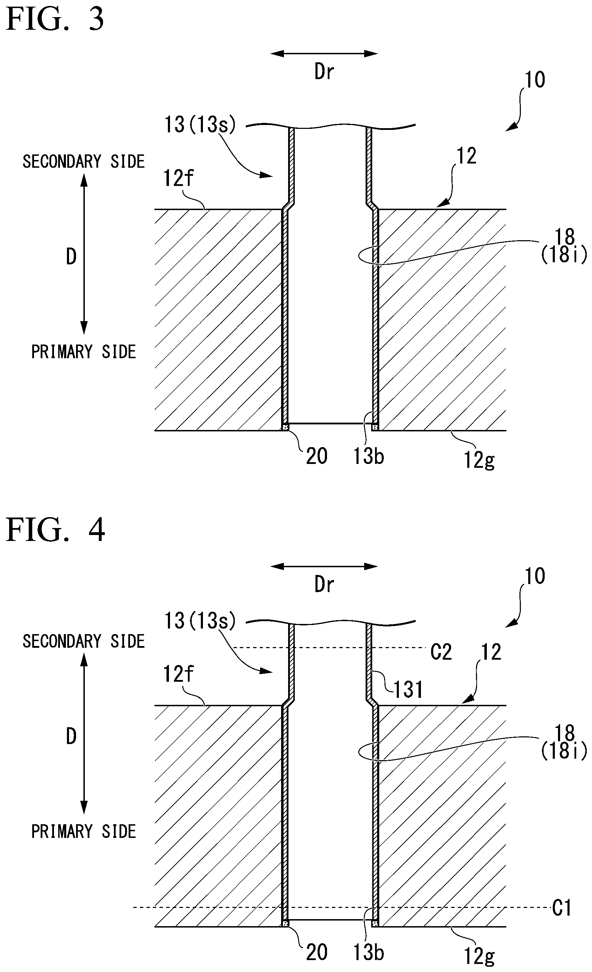

FIG. 3 is a cross-sectional view showing a configuration of a tube plate and a heat transfer tube according to the embodiment of the present disclosure.
FIG. 4 is a cross-sectional view showing a configuration of a disassembly target according to the embodiment of the present disclosure.

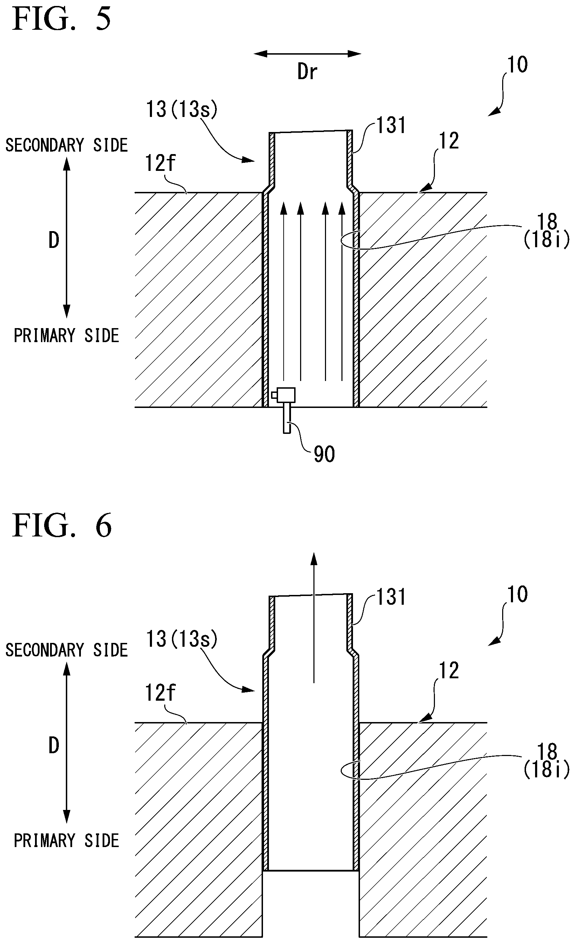

FIG. 5 is an explanatory diagram showing the state of a heating step according to the embodiment of the present disclosure.
FIG. 6 is an explanatory diagram showing the state of a pull-out step according to the embodiment of the present disclosure.

### [Description of Embodiments]

Hereinafter, a steam generator 10 and a method of disassembling the steam generator 10 according to the embodiment of the present disclosure will be described with reference to FIGS. 1 to 6.

### (Configuration of Steam Generator)

As shown in FIG. 1, the steam generator 10 includes a body portion 11, a water chamber 17, a tube plate 12, a plurality of heat transfer tubes 13, and a partition 16. The body portion 11 has a cylindrical shape extending in an axial direction D. The water chamber 17 is provided below the body portion 11. The tube plate 12 is arranged between the body portion 11 and the water chamber 17. The tube plate 12 is arranged along a plane (for example, a horizontal plane) orthogonal to the axial direction D. The tube plate 12 partitions the body portion 11 and the water chamber 17. As a result, the steam generator 10 is formed with a primary cooling water chamber 14 (primary region) below the tube plate 12 and a secondary cooling water chamber 15 (secondary region) above the tube plate 12. The partition 16 divides the primary cooling water chamber 14 into an inlet side water chamber 14a and an outlet side water chamber 14b. Here, one side of the axial direction D with respect to the tube plate 12 is referred to as a primary side, and the other side of the axial direction D with respect to the tube plate 12 is referred to as a secondary side.

The plurality of heat transfer tubes 13 are arranged in the body portion 11. The plurality of heat transfer tubes 13 each have a pair of straight tube portions 13s and a curved portion 13t. The pair of straight tube portions 13s are formed at both end portions of each heat transfer tube 13. Each straight tube portion 13s extends from the primary side to the secondary side. The curved portion 13t is formed in the intermediate portion of each heat transfer tube 13. The curved portion 13t is formed by being curved in an inverted U shape. Both end portions of each heat transfer tube 13 (end portions 13b of each straight tube portion 13s) are fixed to the tube plate 12.

As shown in FIG. 3, a plurality of through-holes 18 penetrating in the axial direction D are formed in the tube plate 12. Each heat transfer tube 13 (more specifically, the straight tube portion 13s) is inserted into each through-hole 18. In the through-hole 18, the heat transfer tube 13 is expanded toward the outside in a radial direction Dr. As a result, each heat transfer tube 13 is pressed against and fixed to an inner wall surface 18i of the through-hole 18.

The end portions 13b of each heat transfer tube 13 are arranged in the vicinity of a first surface 12g of the tube plate 12. The end portion 13b of each heat transfer tube 13 is bonded to the first surface 12g (and the inner wall surface 18i of the through-hole 18) of the tube plate 12 by seal welding. That is, the steam generator 10 has a welded portion 20 for fixing the end portion 13b of the heat transfer tube 13 and the first surface 12g of the tube plate 12.

As shown in FIG. 1, the primary cooling water heated by the nuclear reactor (not shown) is introduced into the inlet side water chamber 14a of the primary cooling water chamber 14 of the steam generator 10. The primary cooling water introduced into the inlet side water chamber 14a passes through the plurality of heat transfer tubes 13 exposed in the secondary cooling water chamber 15 and reaches the outlet side water chamber 14b of the primary cooling water chamber 14.

Secondary cooling water is introduced into the secondary cooling water chamber 15. The secondary cooling water is heated into steam by exchanging heat with the primary cooling water passing through the heat transfer tube 13 in the secondary cooling water chamber 15. The steam generated in the secondary cooling water chamber 15 is sent to a turbine (not shown) installed outside the steam generator 10. Further, the primary cooling water cooled by heat exchange with the secondary cooling water is sent to a nuclear reactor (not shown).

### (Method of Disassembling Steam Generator)

Next, a method of disassembling the steam generator 10 will be described with reference to FIGS. 2 and 4 to 6. As shown in FIG. 2, the method of disassembling the steam generator 10 according to the present embodiment includes a disassembly target forming step S1, a heat transfer tube specifying step S2, a fixation release step S3, and a heat transfer tube pull-out step S4.

As shown in FIG. 4, in the disassembly target forming step S1, the tube plate 12 and the heat transfer tube 13 are cut along cutting lines C1 and C2 on both sides of the thickness direction of the tube plate 12. According to the cutting line C1, the end surfaces of the heat transfer tubes 13 and the tube plate 12 are cut on the primary side across the tube plate 12. At this time, the welded portion 20 described above is removed together with a part of the tube plate 12. As a result, the end surfaces of the heat transfer tubes 13 and the tube plate 12 are flush with each other on the primary side of the tube plate 12.

Further, according to the cutting line C2, the heat transfer tube 13 is cut to protrude from the tube plate 12 on the secondary side. That is, on the secondary side, a part of the heat transfer tube 13 protrudes from the tube plate 12, and accordingly, a protruding portion 131 is formed. As a result, a disassembly target including the tube plate 12 and a part of the heat transfer tube 13 can be obtained.

Next, the heat transfer tube specifying step S2 is executed. In the heat transfer tube specifying step S2, the heat transfer tube 13 that may be fixed is specified based on the management information and/or the visual confirmation regarding each heat transfer tube 13. Here, since the heat transfer tube 13 includes the one that has been expanded as described above, the heat transfer tube 13 may be fixed to the through-hole 18 of the tube plate 12. In this step S2, the heat transfer tube 13 which is a target to be released from fixation in the subsequent step S3 is specified based on the management information and/or the visual confirmation including the tube expansion shape (partial tube expansion, full-thickness expansion tube) or the presence/absence of the plug and the sleeve.

Subsequently, the fixation release step S3 is executed. In the fixation release step S3, the fixation of the heat transfer tube 13 specified in the heat transfer tube specifying step S2 is released. As shown in FIG. 5, in this step S3, a TIG heating head 90 is inserted into the heat transfer tube 13 from the primary side. After that, the TIG heating head 90 is moved in the longitudinal direction of the heat transfer tube 13 from the primary side to the secondary side. Such movement is repeated in a plurality of streaks at intervals in the peripheral direction of the heat transfer tube 13. As a result, the heat transfer tube 13 contracts, and the fixation between the heat transfer tube 13 and the tube plate 12 is released. It is desirable that this fixation release step S3 be performed until the heat transfer tube 13 contracts by 0.5 to 1.5%.

Finally, the heat transfer tube pull-out step S4 is executed. As shown in FIG. 6, in this step S4, the protruding portion 131 of the heat transfer tube 13 in a state where the fixation thereof is released is ascertained by a tool or the like and pulled out of the secondary side. The above steps S3 and S4 are repeatedly executed for all the target heat transfer tubes 13. As a result, all the processes related to the method of disassembling the steam generator 10 according to the present embodiment are completed.

### (Effects)

According to the above method, the fixation of the heat transfer tube 13 and the tube plate 12 is released by heating by the TIG heating head 90, and the heat transfer tube 13 can be easily pulled out of the tube plate 12. Further, the TIG heating head is inserted not from the secondary side where the heat transfer tube 13 protrudes from the tube plate 12, but from the primary side where the tube plate 12 and the heat transfer tube 13 overlap. As a result, damage to the heat transfer tube 13 due to heating of only the heat transfer tube 13 can be suppressed. Therefore, the heat transfer tube 13 and the tube plate 12 can be separated more smoothly.

Further, according to the above method, by moving the TIG heating head 90 to a plurality of streaks, the fixation between the heat transfer tube 13 and the tube plate 12 is stably released in the entire area in the peripheral direction and the longitudinal direction of the heat transfer tube 13.

Further, according to the above method, by gripping the heat transfer tube 13 from the secondary side where the heat transfer tube 13 protrudes from the tube plate 12, the heat transfer tube 13 can be more easily pulled out of the tube plate 12 by using a simple tool.

In addition, according to the above method, the fixed heat transfer tube 13 is specified based on the management information and/or the visual confirmation including the presence/absence of the plug or the state of the tube expansion. As a result, the risk that the heat transfer tube 13 cannot be pulled out is reduced, and the work can proceed more smoothly.

Furthermore, in the above method, in the fixation release step S3, heating is performed until the heat transfer tube 13 contracts by 0.5 to 1.5%. As a result, the heat transfer tube 13 can be pulled out of the tube plate 12 more easily and smoothly by sufficiently contracting the heat transfer tube 13.

### (Other Embodiments)

Above, the embodiments of the present disclosure have been described in detail with reference to the drawings, but the specific configuration or method is not limited to the embodiments, and includes design changes and the like within a scope not departing from the present disclosure.

### <Additional Remarks>

The method of disassembling the steam generator described in each embodiment is ascertained, for example, as follows.
(1) According to a first aspect, there is provided a method of disassembling the steam generator 10 including the body portion 11, the water chamber 17, the tube plate 12 provided between the body portion 11 and the water chamber 17, dividing a primary region on the water chamber 17 side and a secondary region on the body portion 11 side, and having the plurality of through-holes 18 formed to penetrate in a thickness direction, and the plurality of heat transfer tubes 13 inserted into the plurality of through-holes 18, the method of disassembling the steam generator 10 including: a step S1 of obtaining a disassembly target including a part of the tube plate 12 and the heat transfer tubes 13 by cutting end surfaces of the heat transfer tubes 13 and the tube plate 12 on the primary region side across the tube plate 12 and cutting the heat transfer tubes 13 to protrude from the tube plate 12 on the secondary region side; a step S2 of specifying the heat transfer tube 13 fixed to the tube plate 12, among the heat transfer tubes 13 included in the disassembly target; a step S3 of releasing fixation between a part of the heat transfer tube 13 and the tube plate 12 by inserting the TIG heating head 90 into the part of the heat transfer tube 13 fixed to the tube plate 12 and heating the heat transfer tube 13; and a step S4 of pulling out the part of the heat transfer tube 13 from the through-hole 18, in which in the step S3 of releasing the fixation, the TIG heating head 90 is inserted from the primary region side, and in the step S3 of releasing the fixation, the TIG heating head 90 is moved to a plurality of streaks only in a direction from the primary region side to the secondary region side along a longitudinal direction inside the part of the heat transfer tube 13.

According to the above method, the TIG heating head 90 is inserted not from the secondary region side where the heat transfer tube 13 protrudes from the tube plate 12, but from the primary region side where the tube plate 12 and the heat transfer tube 13 overlap. As a result, damage to the heat transfer tube 13 due to heating of only the heat transfer tube 13 can be suppressed. Further, by moving the TIG heating head 90 to a plurality of streaks, it is possible to stably release the fixation between the heat transfer tube 13 and the tube plate 12 in the entire area in the peripheral direction and the longitudinal direction of the heat transfer tube 13.

(2) According to the method of disassembling the steam generator 10 according to a second aspect, in the method of disassembling the steam generator 10 according to the first aspect, in the step S1 of obtaining the disassembly target, the end surfaces of the heat transfer tubes 13 and the tube plate 12 may be cut such that the end surfaces are flush with each other on the primary region side across the tube plate 12.

(3) According to the method of disassembling the steam generator 10 according to a third aspect, in the method of disassembling the steam generator 10 according to the first or second aspect, in the step S4 of pulling out the part of the heat transfer tube 13 from the through-hole 18, the part may be pulled out of the secondary region side.

According to the above method, by gripping the heat transfer tube 13 from the secondary region side where the heat transfer tube 13 protrudes from the tube plate 12, the heat transfer tube 13 can be more easily pulled out of the tube plate by using a simple tool.

(4) According to the method of disassembling the steam generator 10 according to a fourth aspect, in the method of disassembling the steam generator 10 according to any one of the first to third aspects, in the step S2 of specifying the fixed heat transfer tube 13, the heat transfer tube 13 which is a target to be pulled out may be specified based on management information and visual confirmation of the heat transfer tube 13.

According to the above method, the heat transfer tube 13 that can be fixed is specified based on the management information and/or the visual confirmation including the presence/absence of the plug or the state of the tube expansion. As a result, the risk that the heat transfer tube 13 cannot be pulled out is reduced, and the work can proceed more smoothly.

(5) According to the method of disassembling the steam generator 10 according to a fifth aspect, in the method of disassembling the steam generator 10 according to any one of the first to fourth aspects, in the step S3 of releasing the fixation, heating may be performed until the heat transfer tube 13 contracts by 0.5 to 1.5%.

According to the above method, the heat transfer tube 13 can be pulled out of the tube plate 12 more easily and smoothly by sufficiently contracting the heat transfer tube 13.

### [Industrial Applicability]

The present disclosure relates to a method of disassembling a steam generator provided in a nuclear power generation facility. According to the present disclosure, the steam generator can be efficiently disassembled while reducing the spread of contaminants.

### [Reference Signs List]

10: Steam generator
11: Body portion
12: Tube plate
12f: Second surface
12g: First surface
13: Heat transfer tube
13b: End portion
13s: Straight tube portion
13t: Curved portion
14: Primary cooling water chamber
14a: Inlet side water chamber
14b: Outlet side water chamber
15: Secondary cooling water chamber
16: Partition
18: Through-hole
18i: Inner wall surface
20: Welded portion
90: TIG heating head
131: Protruding portion

## Claims

1. A method of disassembling a steam generator (10) including
a body portion (11) having a cylindrical shape and extending in an axial direction,
a water chamber (17) provided below the body portion,
a tube plate (12) provided to partition between the body portion (11) and the water chamber (17), and arranged along a plane orthogonal to the axial direction, and
a plurality of heat transfer tubes (13) inserted into a plurality of through-holes (18) formed to penetrate the tube plate in the axial direction, the steam generator being formed with a primary region below the tube plate and a secondary region above the tube plate,
the method comprising:
a step (S1) of obtaining a disassembly target including the tube plate (12) and a part of the heat transfer tubes (13) by cutting the heat transfer tubes (13) to protrude from the tube plate (12) on the secondary region side;
a step (S2) of specifying the heat transfer tube (13) fixed to the tube plate (12), among the heat transfer tubes (13) included in the disassembly target;
a step (S3) of releasing fixation between the part of the heat transfer tube (13) and the tube plate (12) by inserting a TIG heating head (90) into the part of the heat transfer tube (13) fixed to the tube plate (12) to heat the heat transfer tube (13); and
a step (S4) of pulling out the part of the heat transfer tube (13) from the through-hole (18), wherein
in the step (S3) of releasing the fixation, the TIG heating head (90) is inserted from the primary region side,
**characterized in that**
in the step (S1) of obtaining a disassembly target, cutting end surfaces of the heat transfer tubes (13) and the tube plate (12) on the primary region side across the tube plate (12),
in the step (S4) of pulling out, pulling the heat transfer tube (13) from the primary region side toward the secondary region side, and
in the step (S3) of releasing the fixation, the TIG heating head (90) is only moved in the longitudinal direction of the heat transfer tube (13) from the primary region side to the secondary region side, said movement being repeated in a plurality of streaks at intervals in the peripheral direction of the heat transfer tube (13).

2. The method of disassembling a steam generator (10) according to Claim 1, wherein
in the step (S1) of obtaining the disassembly target, the end surfaces of the heat transfer tubes (13) and the tube plate (12) are cut such that the end surfaces are flush with each other on the primary region side across the tube plate (12).

3. The method of disassembling a steam generator (10) according to Claim 1 or 2, wherein
in the step (S2) of specifying the fixed heat transfer tube (13), the heat transfer tube (13) which is a target to be pulled out is specified based on management information and visual confirmation of the heat transfer tube (13).

4. The method of disassembling a steam generator (10) according to any one of Claims 1 to 3, wherein
in the step (S3) of releasing the fixation, heating is performed until the diameter of the heat transfer tube (13) is 0.5 to 1.5% smaller than the diameter of the heat transfer tube in the step of specifying the fixed heat transfer tube.

## Patentansprüche

1. Verfahren zum Zerlegen eines Dampferzeugers (10), das Folgendes beinhaltet
einen Körperabschnitt (11), der eine zylindrische Form aufweist und sich in axialer Richtung erstreckt,
eine Wasserkammer (17), die unterhalb des Körperabschnitts bereitgestellt ist,
eine Rohrplatte (12), die bereitgestellt ist, um zwischen dem Körperabschnitt (11) und der Wasserkammer (17) zu unterteilen und entlang einer orthogonalen Ebene zu der axialen Richtung angeordnet ist, und
eine Vielzahl von Wärmeübertragungsrohren (13), die in eine Vielzahl von Durchgangslöchern (18) eingesetzt sind, die zum Durchdringen der Rohrplatte in axialer Richtung gebildet sind, wobei der Dampferzeuger mit einem Primärbereich unterhalb der Rohrplatte und einem Sekundärbereich oberhalb der Rohrplatte gebildet ist, das Verfahren umfassend:
einen Schritt (S1) eines Erlangens eines Zerlegeziels, das die Rohrplatte (12) und einen Teil der Wärmeübertragungsrohre (13) beinhaltet, indem die Wärmeübertragungsrohre (13) geschnitten werden, um auf der Sekundärbereichsseite aus der Rohrplatte (12) hervorzustehen;
einen Schritt (S2) eines Spezifizierens des an der Rohrplatte (12) befestigten Wärmeübertragungsrohrs (13) unter den im Zerlegeziel beinhalteten Wärmeübertragungsrohren (13);
einen Schritt (S3) eines Lösens einer Befestigung zwischen dem Teil des Wärmeübertragungsrohrs (13) und der Rohrplatte (12), indem ein TIG-Heizkopf (90) in den an der Rohrplatte (12) befestigten Teil des Wärmeübertragungsrohrs (13) eingeführt wird, um das Wärmeübertragungsrohr (13) zu erhitzen; und
einen Schritt (S4) eines Herausziehens des Teils des Wärmeübertragungsrohrs (13) aus dem Durchgangsloch (18), wobei
bei dem Schritt (S3) eines Lösens der Befestigung der TIG-Heizkopf (90) von der Primärbereichsseite eingeführt wird,
**dadurch gekennzeichnet, dass**
bei dem Schritt (S1) eines Erlangens eines Zerlegeziels die Schnittflächen der Wärmeübertragungsrohre (13) und der Rohrplatte (12) auf der Primärbereichsseite über die Rohrplatte (12) hinweg geschnitten werden,
bei dem Schritt (S4) eines Herausziehens das Wärmeübertragungsrohr (13) von der Primärbereichsseite in Richtung der Sekundärbereichsseite gezogen wird, und
bei dem Schritt (S3) eines Lösens der Befestigung der TIG-Heizkopf (90) in Längsrichtung des Wärmeübertragungsrohrs (13) von der Primärbereichsseite zu der Sekundärbereichsseite bewegt wird, wobei die Bewegung in einer Vielzahl von Streifen in Abständen in Umfangsrichtung des Wärmeübertragungsrohrs (13) wiederholt wird.

2. Verfahren zum Zerlegen eines Dampferzeugers (10) nach Anspruch 1, wobei
bei dem Schritt (S1) eines Erlangens des Zerlegeziels die Endflächen der Wärmeübertragungsrohre (13) und der Rohrplatte (12) geschnitten werden, sodass die Endflächen auf der Primärbereichsseite über die Rohrplatte (12) hinweg bündig zueinander sind.

3. Verfahren zum Zerlegen eines Dampferzeugers (10) nach Anspruch 1 oder 2, wobei
bei dem Schritt (S2) eines Bestimmens des befestigten Wärmeübertragungsrohrs (13) das Wärmeübertragungsrohr (13), das herausgezogen werden soll, basierend auf Verwaltungsinformationen und visueller Bestätigung des Wärmeübertragungsrohrs (13) bestimmt wird.

4. Verfahren zum Zerlegen eines Dampferzeugers (10) nach einem der Ansprüche 1 bis 3, wobei
bei dem Schritt (S3) eines Lösens der Befestigung die Erwärmung durchgeführt wird, bis der Durchmesser des Wärmeübertragungsrohrs (13) um 0,5 bis 1,5 % kleiner ist als der Durchmesser des Wärmeübertragungsrohrs bei dem Schritt eines Spezifizierens des befestigten Wärmeübertragungsrohrs.

## Revendications

1. Procédé de démontage d'un générateur de vapeur (10) comprenant
une partie de corps (11) ayant une forme cylindrique et s'étendant dans une direction axiale,
une chambre à eau (17) disposée sous la partie de corps,
une plaque tubulaire (12) disposée pour séparer la partie de corps (11) et la chambre à eau (17), et agencée le long d'un plan orthogonal à la direction axiale, et
une pluralité de tubes de transfert de chaleur (13) insérés dans une pluralité de trous traversants (18) formés pour pénétrer dans la plaque tubulaire dans la direction axiale, le générateur de vapeur étant formé avec une région primaire sous la plaque tubulaire et d'une région secondaire au-dessus de la plaque tubulaire,
le procédé comprenant :
une étape (S1) d'obtention d'une cible de démontage comprenant la plaque tubulaire (12) et une partie des tubes de transfert de chaleur (13) en coupant les tubes de transfert de chaleur (13) de manière à les faire dépasser de la plaque tubulaire (12) du côté de la région secondaire ;
une étape (S2) de spécification du tube de transfert de chaleur (13) fixé à la plaque tubulaire (12), parmi les tubes de transfert de chaleur (13) inclus dans la cible de démontage ;
une étape (S3) de libération de la fixation entre la partie du tube de transfert de chaleur (13) et la plaque tubulaire (12) en insérant une tête de chauffage TIG (90) dans la partie du tube de transfert de chaleur (13) fixée à la plaque tubulaire (12) pour chauffer le tube de transfert de chaleur (13) ; et
une étape (S4) d'extraction de la partie du tube de transfert de chaleur (13) du trou traversant (18), dans laquelle :
à l'étape (S3) de libération de la fixation, la tête de chauffage TIG (90) est insérée depuis le côté de la région primaire,
**caractérisé en ce que** :
à l'étape (S1) d'obtention d'une cible de démontage, les surfaces d'extrémité des tubes de transfert de chaleur (13) et de la plaque tubulaire (12) du côté de la région primaire sont coupées à travers la plaque tubulaire (12),
à l'étape (S4) d'extraction, le tube de transfert de chaleur (13) est tiré depuis le côté de la région primaire vers le côté de la région secondaire, et
à l'étape (S3) de libération de la fixation, la tête de chauffage TIG (90) est déplacée uniquement dans la direction longitudinale du tube de transfert de chaleur (13) depuis le côté de la région primaire vers le côté de la région secondaire, ledit déplacement étant répété selon une pluralité de stries à intervalles dans la direction périphérique du tube de transfert de chaleur (13).

2. Procédé de démontage d'un générateur de vapeur (10) selon la revendication 1, dans lequel :
à l'étape (S1) d'obtention de la cible de démontage, les surfaces d'extrémité des tubes de transfert de chaleur (13) et de la plaque tubulaire (12) sont coupées de sorte que les surfaces d'extrémité soient affleurantes l'une à l'autre du côté de la région primaire à travers la plaque tubulaire (12).

3. Procédé de démontage d'un générateur de vapeur (10) selon la revendication 1 ou 2, dans lequel :
à l'étape (S2) de spécification du tube de transfert de chaleur (13) fixé, le tube de transfert de chaleur (13) qui est une cible à extraire est spécifié sur la base d'informations de gestion et d'une confirmation visuelle du tube de transfert de chaleur (13).

4. Procédé de démontage d'un générateur de vapeur (10) selon l'une quelconque des revendications 1 à 3, dans lequel :
à l'étape (S3) de libération de la fixation, le chauffage est effectué jusqu'à ce que le diamètre du tube de transfert de chaleur (13) soit de 0,5 à 1,5 % plus petit que le diamètre du tube de transfert de chaleur à l'étape de spécification du tube de transfert de chaleur fixé.
